**Europäisches Patentamt**

**European Patent Office**

**Office européen des brevets**

(11) Veröffentlichungsnummer: **0 501 102 A1**

## EUROPÄISCHE PATENTANMELDUNG

(21) Anmeldenummer: **92100085.7**

(22) Anmeldetag: **04.01.92**

(51) Int. Cl.5: **D06F 37/20**, F16F 9/54, F16B 17/00, F16C 11/02

(30) Priorität: **23.02.91 DE 4105763**

(43) Veröffentlichungstag der Anmeldung:
**02.09.92 Patentblatt 92/36**

(84) Benannte Vertragsstaaten:
**DE ES FR GB GR IT PT SE**

(71) Anmelder: **SUSPA COMPART Aktiengesellschaft**
**Industriestrasse 12-14**
**W-8503 Altdorf(DE)**

(72) Erfinder: **Stadelmann, Ludwig**
**Schopperstrasse 14**
**W-8503 Altdorf(DE)**
Erfinder: **Mayer, Dieter**
**Schillerstrasse 20**
**W-8458 Sulzbach-Rosenberg(DE)**

(74) Vertreter: **Rau, Manfred, Dr. Dipl.-Ing. et al**
**Rau & Schneck, Patentanwälte Königstrasse 2**
**W-8500 Nürnberg 1(DE)**

(54) **Anlenkung eines Schwingungsdämpfers für eine Waschmaschine.**

(57) Für eine Anlenkung eines Schwingungsdämpfers (11) für eine Waschmaschine weist der Schwingungsdämpfer (11) eine Gelenkbüchse (19b) auf, die in einem Lager (22b) gelagert ist. Letzteres weist die Gelenkbüchse (19b) zwischen sich aufnehmende Seitenwangen (26) auf, die zu einer Lageröffnung (28) führende Einführöffnungen (29b) für einen Lagerkörper (3o) aufweisen. Der Lagerkörper (3o) ist in den Lageröffnungen (28) mittels einer elastischen Verriegelung in Richtung der Einführöffnungen (29b) gehalten.

FIG. 7

Die Erfindung betrifft eine Anlenkung eines Schwingungsdämpfers für eine Waschmaschine entsprechend dem Oberbegriff des Anspruches 1.

Es ist bekannt, als Lagerkörper Gewindebolzen zu verwenden, die nach dem Hindurchstecken des Gewindebolzens durch die Seitenwangen des Lagers mittels einer Mutter festgelegt werden.

Weiterhin ist es aus der EP o 217 234 B1 bekannt, als Lagerkörper einen Lagerbolzen zu verwenden, der nach dem Einführen der Gelenkbüchse zwischen die Seitenwangen des Lagers seitlich hindurchgeschoben wird. Gegen Herausfallen wird er mittels einer elastischen Zunge gesichert, die an einer Seitenwange ausgebildet ist. Ein derartiges Lager kann in wirtschaftlicher Weise nur aus Kunststoff hergestellt werden, da es eine relativ komplizierte Form hat. Darüber hinaus erfordert das Hindurchschieben des Bolzens ein genau fluchtendes Ausrichten der Gelenkbüchse relativ zu den Lageröffnungen der Seitenwangen des Lagers; die Montage ist also mit einigem Aufwand verbunden.

Der Erfindung liegt die Aufgabe zugrunde, eine Anlenkung der gattungsgemäßen Art so auszugestalten, daß eine besonders einfache Montage möglich ist.

Diese Aufgabe wird erfindungsgemäß durch die Merkmale im Kennzeichnungsteil des Anspruches 1 gelöst. Durch die erfindungsgemäßen Maßnahmen wird erreicht, daß der Schwingungsdämpfer mit seiner Gelenkbüchse lediglich in das entsprechende Lager eingeschoben wird, wobei der Lagerkörper durch die Einführöffnungen in die jeweilige Lageröffnung hineingleitet. Dann wird die elastische Verriegelung geschlossen. Die Montage ist abgeschlossen. Die Ausgestaltung nach Anspruch 2 weist den Vorteil auf, daß auf den Lagerkörper während des Betriebes keine Kräfte in Richtung zur Einführöffnung auftreten. Der für die Verriegelung erforderliche Aufwand kann also besonders klein gehalten werden.

Der Vorteil der Ausgestaltung nach Anspruch 3 liegt dagegen darin, daß die Montage besonders einfach ist.

Anspruch 4 gibt eine besonders einfache Ausgestaltung wieder, bei der die Verriegelung beim Einschieben des als elastisch zusammendrückbare Lagerhülse ausgebildeten Lagerkörpers durch die Einführöffnung in die Lageröffnungen erfolgt. Diese Ausgestaltung wird bevorzugt in der Kombination mit Anspruch 2 realisiert.

Bei der Ausgestaltung nach Anspruch 5 ist zwar ein zusätzlicher Handgriff bei der Montage erforderlich; dafür ist die Sicherheit der Verriegelung besonders hoch. Die Ansprüche 6 bis 1o geben besonders vorteilhafte Ausgestaltungen der grundsätzlichen Lösung nach Anspruch 5 wieder.

Weitere Vorteile, Merkmale und Einzelheiten der Erfindung ergeben sich aus der nachfolgenden Beschreibung zahlreicher Ausführungsbeispiele anhand der Zeichnung. Es zeigt

Fig. 1     eine Trommelwaschmaschine in schematischer Darstellung in Seitenansicht,

Fig. 2     die Trommelwaschmaschine gemäß Fig. 1 in Vorderansicht,

Fig. 3     eine erste Ausführungsform einer Anlenkung eines Schwingungsdämpfers in der Trommelwaschmaschine,

Fig. 4     eine Seitenansicht gemäß dem Sichtpfeil IV in Fig. 3,

Fig. 5     eine vergrößerte Darstellung eines Lagers der Anlenkung nach den Fig. 3 und 4,

Fig. 6     eine Lagerhülse der Anlenkung nach den Fig. 3 und 4,

Fig. 7     eine zweite Ausführungsform einer Anlenkung in einer Teil-Seitenansicht,

Fig. 8     ein Widerlager der Anlenkung nach Fig. 7 entsprechend der Schnittlinie VIII-VIII in Fig. 7,

Fig. 9     einen Sicherungsbügel der Anlenkung nach den Fig. 7 und 8,

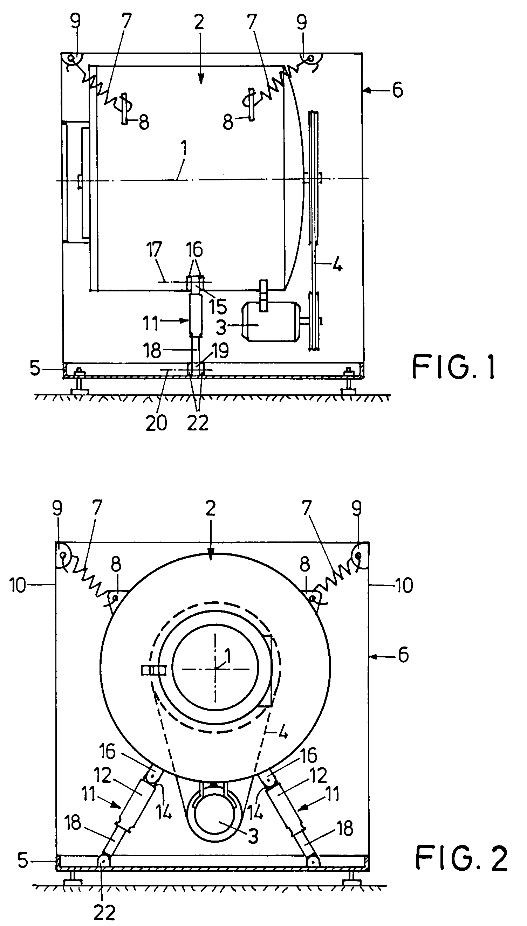

Fig. 1o     eine dritte Ausführungsform einer Anlenkung in einer Teil-Seitenansicht,

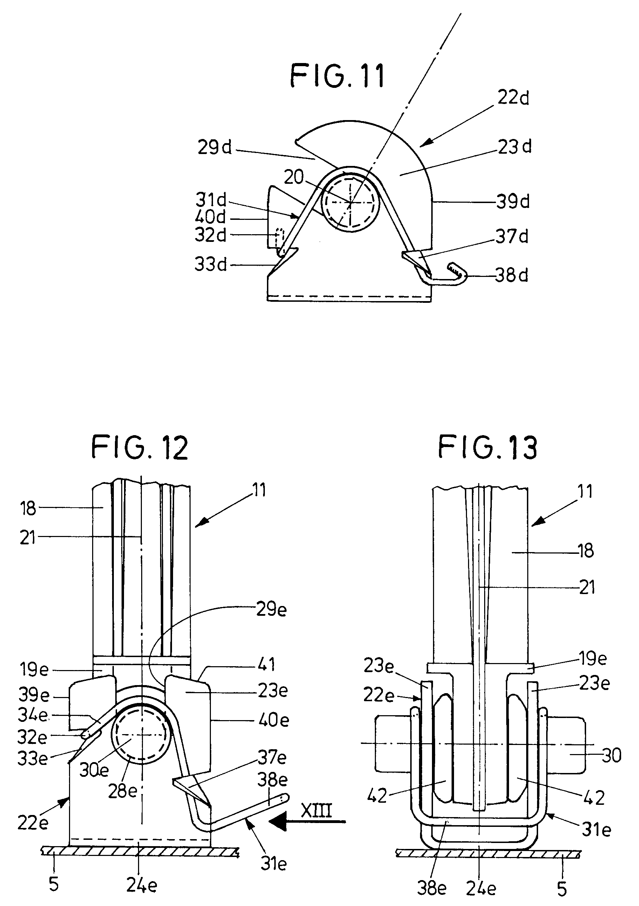

Fig. 11     eine vierte Ausführungsform einer Anlenkung in einer Teil-Seitenansicht,

Fig. 12     eine fünfte Ausführungsform einer Anlenkung in einer Teil-Seitenansicht,

Fig. 13     die Anlenkung nach Fig. 12 in einer Ansicht gemäß dem Sichtpfeil XIII in Fig. 12,

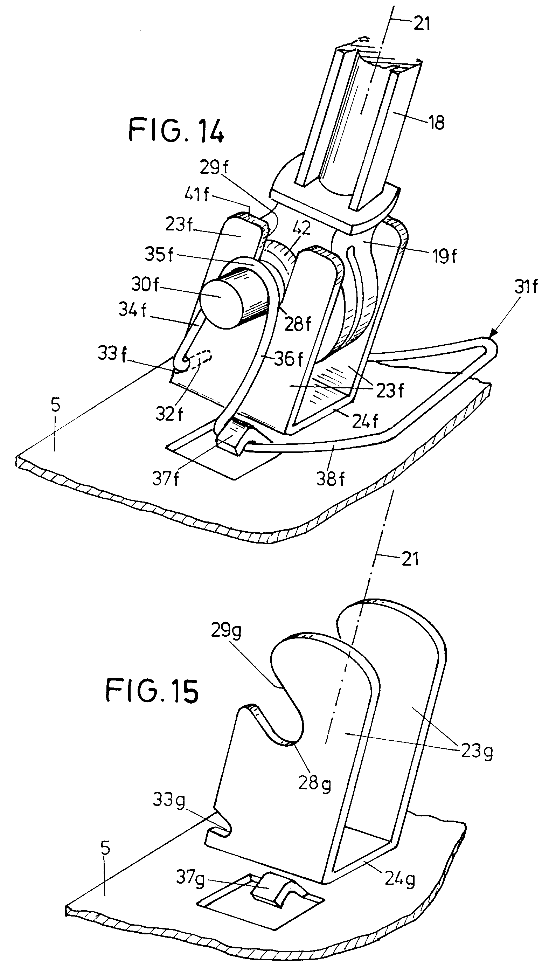

Fig. 14     eine sechste Ausführungsform einer Anlenkung in einer perspektivischen Teil-Seitenansicht und

Fig. 15     eine siebte Ausführungsform einer Anlenkung in einer Teil-Seitenansicht.

Eine Trommelwaschmaschine mit waagerechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen 5 gebildeten Maschinengestell abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden 1o des Gehäuses 6 ausgebildet sind.

Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP o 1o8 217 B1 (entsprechend US Ser. No. 539 594) bekannt sind. Entscheidend ist, daß das Waschaggregat 2 frei schwingungsfähig aufgehängt bzw. abgestützt ist.

Zwischen dem Waschaggregat 2 und dem Maschinengestell 5 sind weiterhin Schwingungsdämpfer 11 angeordnet, bei denen es sich in der Regel um Reibungsdämpfer handelt, wie sie beispielsweise aus der DE 29 42 716 C2 (entsprechend US-PS 4 765 444) oder der EP o 336 176 A2 (entsprechend US-PS 4 934 493) oder der EP o 3o1 19o A1 oder der EP o 362 54o A1 (entsprechend US-PS 4 946 oo8) bekannt sind, auf die insoweit verwiesen wird. Selbstverständlich können die Schwingungsdämpfer 11 aber auch als hydraulisch wirkende Dämpfer ausgebildet sein.

Bei den nachfolgend geschilderten Ausführungsbeispielen weist der Schwingungsdämpfer 11 ein Gehäuse 12 auf. Das Gehäuse 12 besteht im wesentlichen aus einem zylindrischen Rohr 13, das an einem Ende mittels eines Bodens 14 verschlossen ist. An der Außenseite des Bodens 14 ist eine Gelenkbüchse 15 als Anlenkelement angebracht, mittels derer der Schwingungsdämpfer 11 an einem Lager 16 am Waschaggregat 2 um eine Schwenkachse 17 schwenkbar angebracht ist, die parallel zur Trommelachse 1 verläuft.

Der jeweilige Schwingungsdämpfer 11 weist weiterhin einen Stößel 18 auf, der an seinem äußeren Ende ebenfalls eine Gelenkbüchse 19 aufweist, deren Schwenkachse 2o gleichermaßen wie die Schwenkachse 17 die Mittel-Längs-Achse 21 des jeweiligen Schwingungsdämpfers 11 senkrecht schneidet. Mit dieser Gelenkbüchse 19 wird der Schwingungsdämpfer 11 in einem am Maschinengestell 5 angebrachten Lager 22 in der Weise schwenkbar festgelegt, daß die Schwenkachse 2o ebenfalls parallel zur Trommelachse 1 verläuft.

In den nachfolgenden Ausführungsbeispielen werden die Einzelheiten der Befestigung der Gelenkbüchsen 15,19 in den Lagern 16,22 mehr im Detail beschrieben, wobei jeweils dieselben Bezugsziffern wie bei der allgemeinen Beschreibung der Fig. 1 und 2 verwendet werden, denen jedoch jeweils ein Buchstabe hinzugefügt wird, der für jedes Ausführungsbeispiel unterschiedlich ist.

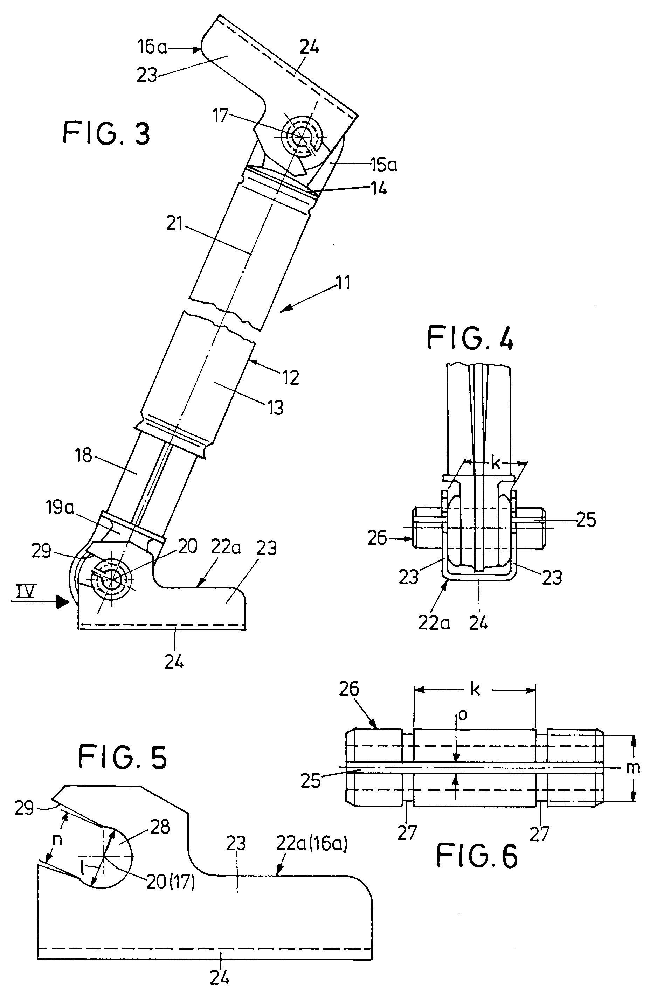

Bei dem Ausführungsbeispiel nach den Fig. 3 bis 6 sind die Lager 16a und 22a etwa U-förmig ausgebildet. Sie weisen jeweils identisch ausgebildete Seitenwangen 23 auf, die mit einem Quersteg 24 verbunden sind, der an dem Grundrahmen 5 bzw. dem Waschaggregat 2 befestigt ist. In den Gelenkbüchsen 15a bzw. 19a sind mit einem Längsschlitz 25 versehene, aus einem elastischen Material, beispielsweise einem hartelastischen Kunststoff bestehende Lagerhülsen 26 angeordnet. Jede Lagerhülse 26 weist zwei Umfangsnuten 27 auf, deren Abstand k in Richtung der Schwenkachsen 17 bzw. 2o dem Abstand k der Seitenwangen 23 eines Lagers 16a bzw. 22a entspricht.

In den Seitenwangen 23 sind Lageröffnungen 28 zur Aufnahme der Lagerhülse 26 ausgebildet. Diese Lageröffnungen 28 fluchten jeweils in Richtung der entsprechenden Schwenkachse 17 bzw. 2o miteinander. Ihr Durchmesser 1 entspricht im wesentlichen dem Durchmesser m der Umfangsnuten 27.

Zum Einführen einer Lagerhülse 26 in ein Lager 16a bzw. 22a sind die Lageröffnungen 28 mit jeweils einer Einführöffnung 29 versehen, deren Richtung bei dem Ausführungsbeispiel nach den Fig. 3 bis 6 quer zur Richtung der Mittel-Längs-Achse 21 verläuft. Die Einführöffnungen 29 sind leicht trichterförmig ausgebildet, d.h. sie verjüngen sich zur jeweiligen Lageröffnung 28 hin. Die Breite n der Einführöffnung 29 am Übergang in die jeweilige Lageröffnung 28 ist geringer als der Durchmesser 1, wobei wiederum die Differenz des Durchmessers 1 und der Breite n kleiner ist als die Breite o des Längsschlitzes 25.

Die Lager 16a und 22a bestehen aus steifem nicht nachgiebigem Material, beispielsweise aus ausreichend stabilem Blech, so daß die Seitenwangen 23 quer zur Richtung der Einführöffnung 29 unnachgiebig sind.

Zur Montage eines Schwingungsdämpfers 11 wird die in der oberen Gelenkbüchse 15a befindliche Lagerhülse 26 quer in die Einführöffnungen 29 des am Waschaggregat 2 befindlichen Lagers 16a eingeführt. Hierbei wird die Lagerhülse 26 elastisch zusammengedrückt, was durch den Längsschlitz 25 ermöglicht wird. Wenn die Lagerhülse 26 in die Lageröffnungen 28 gelangt, weitet sie sich wieder elastisch auf. Die Seitenwangen 23 greifen in die Umfangsnuten 27 ein. Die Montage der Gelenkbüchse 19a im Lager 22a geht in gleicher Weise vor sich. Die Montage des Schwingungsdämpfers 11 ist also mit zwei einfachen Handbewegungen möglich. Da die Einführöffnungen 29 quer zur Mittel-Längs-Achse 21 des Schwingungsdämpfers 11 in seiner Ruhelage angeordnet sind, treten auch im Betrieb, also bei Auslenkung der Achse 21 aus ihrer Ruhelage keine oder höchstens sehr geringe Kräfte auf, die an den Lagerhülsen 26 in Richtung der Einführöffnung 29 wirken. Im übrigen greifen an den Schwingungsdämpfern 11 ohnehin nur die Dämpfungskräfte an. Schließlich werden die Lagerhülsen 26 durch die geschilderten elastischen Kräfte in den Lageröffnungen 28 gehalten.

Bei den nachfolgenden Ausführungsbeispielen wird nur noch jeweils die Anlenkung des Schwingungsdampfers 11 in dem am Grundrahmen 5 befindlichen Lager dargestellt und beschrieben. Die Befestigung am Waschaggregat 2 ist in der Regel identisch.

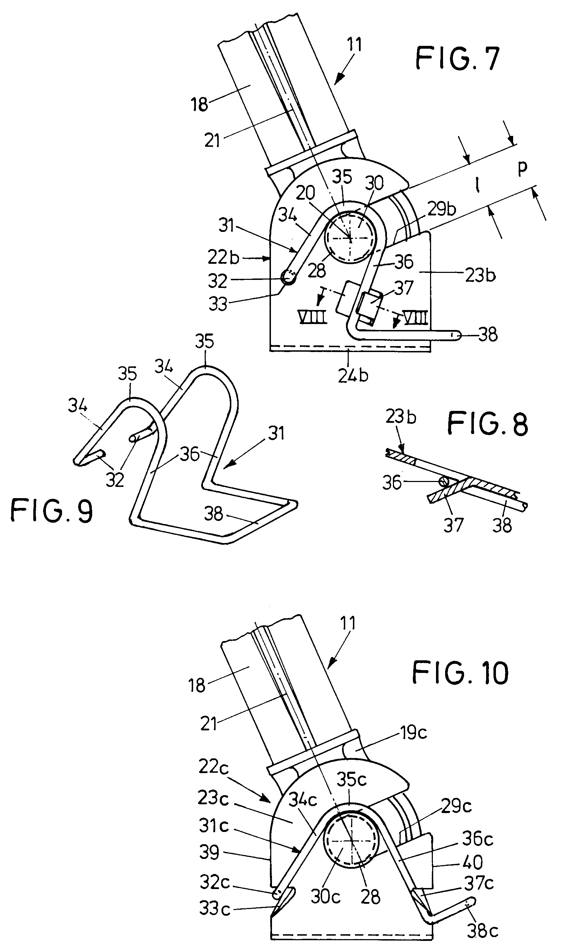

Bei dem Ausführungsbeispiel nach den Fig. 7 bis 9 ist in der Gelenkbüchse 19b ein Lagerbolzen 3o angeordnet, der identisch wie die Lagerhülse 26 mit dem einzigen Unterschied ausgebildet ist, daß er keinen Längsschlitz aufweist. Insoweit kann auf die obige Beschreibung verwiesen werden. In den Seitenwangen 23b des Lagers 22b sind in die Lageröffnungen 28 Einführöffnungen 29b ausgebildet, deren Breite p gleich dem Durchmesser 1 der Lageröffnung ist. Die Lagerbolzen 3o werden also nicht in die Lageröffnungen 28 eingerastet, sondern lediglich eingeschoben bzw. eingelegt.

Zur Sicherung der Lagerbolzen 3o in dem Lager 22b ist ein Sicherungsbügel 31 vorgesehen, der die beiden Seitenwangen 23b außen umgibt und mit zwei freien aufeinanderzu gerichteten Enden 32 in entsprechenden Ausnehmungen 33 schwenkbar gelagert ist. Er weist im Anschluß an diese freien Enden einen etwa U- oder V-förmigen Bereich 34 auf, der etwa mittig einen etwa halbkreisförmigen Abschnitt 35 aufweist, der sich in verriegeltem Zustand des Sicherungsbügels 31 um den zur Einführöffnung 29b liegenden Bereich des Lagerbolzens 3o legt. An den halbkreisförmigen Abschnitt 35 schließt sich jeweils ein zu dem Bereich 34 gehörender Schenkel 36 an, der hinter einem Widerlager 37 festgelegt werden kann, das in Form eines Lappens oder Steges aus der jeweiligen Seitenwange 23b teilweise ausgestanzt und nach außen herausgebogen ist, wie Fig. 8 entnehmbar ist. Die Schenkel 36 sind durch einen C-förmigen Verbindungs- und Betätigungs-Abschnitt 38 miteinander verbunden, so daß der gesamte Sicherungsbügel 31, der aus hartelastischem Draht besteht, einstückig ausgebildet ist.

Nach dem Einlegen des Lagerbolzens 3o der Gelenkbüchse 19b durch die Einführöffnungen 29b in die Lageröffnungen 28 wird der vorher bereits mit seinen freien Enden 32 in die Ausnehmung 33 elastisch eingerastete Sicherungsbügel - in Fig. 7 im Uhrzeigersinn - nach unten geschwenkt, wobei die beiden Schenkel 36 elastisch aufgeweitet werden, wenn sie über das Widerlager 37 hinweggleiten. Sie rasten dann hinter das jeweilige Widerlager 37, wie Fig. 8 zu entnehmen ist.

Das Ausführungsbeispiel nach Fig. 1o unterscheidet sich von dem nach den Fig. 7 bis 9 im wesentlichen nur dadurch, daß einerseits die Ausnehmung 33c zur Aufnahme des jeweiligen freien Endes 32c des Sicherungsbügels 31c von einer Seitenkante 39 der Seitenwange 23c in diese eingearbeitet ist, also ausgestanzt ist. Diese Ausnehmung 33c befindet sich gegenüber der Einführöffnung 29c für den Lagerbolzen 3oc in die Lageröffnung 28. Das Widerlager 37c ist aus der gegenüberliegenden, also der Einführöffnung 29c benachbarten Seitenkante 4o der jeweiligen Seitenwange 23c ausgestanzt und abgebogen. Der jeweilige Schenkel 36c des Sicherungsbügels 31c wird in gleicher Weise wie bei dem Ausführungsbeispiel nach den Fig. 7 bis 9 hinter das Widerlager 37c gerastet. Während bei dem Ausführungsbeispiel nach den Fig. 7 bis 9 der Lagerbolzen 3o vom Sicherungsbügel 31 um angenähert 18o° umschlungen wird, ist der entsprechende Umschlingungswinkel beim Ausführungsbeispiel nach Fig. 1o etwas kleiner.

Das Ausführungsbeispiel nach Fig. 11 unterscheidet sich von dem nach Fig. 1o im wesentlichen dadurch, daß die Ausnehmung 33d sich benachbart zur Einführöffnung 29d befindet, während das Widerlager 37d sich im Bereich der Seitenkante 39d befindet. Weiterhin ist der Sicherungsbügel 31d geteilt, d.h. es sind zwei Sicherungsbügel 31d vorgesehen, von denen jeweils einer jeder Seitenwange 23d zugeordnet ist. Damit der jeweilige Sicherungsbügel 31d auch im Bereich der Ausnehmung 33d in Richtung der Schwenkachse 2o relativ zur entsprechenden Seitenwange 23d festgelegt ist, ist das freie Ende 32d des Sicherungsbügels 31d derart umgebogen, daß es die Seitenwange 23d auf ihrer Innenseite umfaßt. Selbstverständlich kann diese zweiteilige Ausgestaltung des Sicherungsbügels 31d auch bei dem Ausführungsbeispiel nach Fig. 1o vorgesehen sein. Entsprechend der zweiteiligen Ausgestaltung ist an dem dem freien Ende 32d entgegengesetzten Ende des Sicherungsbügels 31d jeweils nur ein Betätigungsabschnitt 38d ausgebildet.

Das Ausführungsbeispiel nach den Fig. 12 und 13 unterscheidet sich von allen vorhergehenden Ausführungsbeispielen dadurch, daß die Einführöffnung 29e in Richtung der Mittel-Längs-Achse 21 des Schwingungsdämpfers 11 verläuft und zu letzterem hin geöffnet ist. Jede Einführöffnung 29e ist also zu einer zwischen den Seitenkanten 39e und 4oe befindlichen und etwa quer hierzu verlaufenden oberen Kante 41 hin geöffnet. Auch hier ist der Sicherungsbügel 31e mit seinen freien Enden 32e in Ausnehmungen 33e gelagert, die im Bereich einer Seitenkante 39e aus der Seitenwange 23e ausgestanzt ist, und zwar ähnlich wie bei dem Ausführungsbeispiel nach Fig. 1o.

Das Widerlager 37e ist dementsprechend im Bereich der gegenüberliegenden Seitenkante 4oe aus der Seitenwange 23e herausgebogen. Aus Fig. 12 ist im übrigen erkennbar, daß die Gelenkbüchse 19e zwischen sich und den Seitenwangen 23e des Lagers 22e Dämpfungseinlagen 42 aufweist. Diese sind grundsätzlich bei allen Ausführungsbeispielen vorhanden.

Bei dem Ausführungsbeispiel nach Fig. 14 ist abweichend von dem nach den Fig. 12 und 13 das Widerlager 37f nicht aus der entsprechenden Seitenwange 23f ausgestanzt und herausgebogen, sondern aus dem Grundrahmen 5 der Waschmaschine herausgestanzt und hakenförmig herausgebogen. Im übrigen umschlingt der Sicherungsbügel 31f den Lagerbolzen 3of etwa um 18o°, und zwar wie bei den Ausführungsbeispielen nach den Fig. 7 bis 9 und Fig. 11. In diesem Fall greift nicht der Schenkel 36f des Sicherungsbügels 31f unter das Widerlager 37f, sondern der von diesem abgewinkelt verlaufende Verbindungs- und Betätigungsabschnitt 38f.

Die Ausgestaltung nach Fig. 15 ist eine Abwandlung der Ausführung nach Fig. 14. Hierbei ist lediglich die Einführöffnung 29g etwa quer zur Mittel-Längs-Achse 21 verlaufend ausgebildet.

Sowohl bei der Ausgestaltung nach den Fig. 3 bis 6 als auch bei den Ausgestaltungen nach den Fig. 7 bis 15 ist eine Lockerung der Anlenkung nicht möglich. Die Lagerhülse 26 bei dem Ausführungsbeispiel nach den Fig. 3 bis 6 zentriert sich aufgrund ihrer Elastizität in den Lageröffnungen 28 immer wieder aufs neue. Die Sicherungsbügel 31,31c,31d,31e,31f,31g werden beim Einrasten stark elastisch verformt, so daß sie auch immer wieder den Lagerbolzen 3o,3oc f.f. elastisch in die Lageröffnungen 28 hineinziehen und zentrieren. Aus diesem Grunde ist es vorteilhaft, wenn die Sicherungsbügel 31,31c,31d,31e,31f, 31g aus einem stark federnden Stahl oder sogar einem Federstahl bestehen.

**Patentansprüche**

1. Anlenkung eines Schwingungsdämpfers (11) für eine Waschmaschine, die ein in einem Waschmaschinen-Gehäuse (6) angeordnetes Waschaggregat (2) mit horizontaler Trommelachse (1) aufweist, wobei der Schwingungsdämpfer (11) jeweils mit einer Gelenkbüchse (15,19) in einem Lager (16) am Waschaggregat (2) und in einem Lager (22) an dem Waschmaschinen-Gehäuse (6) um jeweils zur Trommelachse (1) parallele Schwenkachsen (17,2o) schwenkbar gelagert ist, wobei das jeweilige Lager (16,22) zwei die Gelenkbüchse (15,19) zwischen sich aufnehmende Seitenwangen (23) aufweist, in denen Lageröffnungen (28) ausgebildet sind, in denen jeweils ein mit der Gelenkbüchse (15,19) verbundener Lagerkörper (26,3o) gelagert ist, und wobei der Schwingungsdämpfer (11) eine die Schwenkachsen (17,2o) schneidende Mittel-Längs-Achse (21) aufweist, dadurch gekennzeichnet, daß jede Lageröffnung (28) mindestens eines Lagers (16,22) mit zu einer Kante (4o,41) der jeweiligen Seitenwange (23) offenen Einführöffnung (29) für den Lagerkörper (26,3o) versehen ist und daß der Lagerkörper (26,3o) in den Lageröffnungen (28) mittels einer elastischen Verriegelung in Richtung der Einführöffnungen (29) gehalten ist.

2. Anlenkung nach Anspruch 1, dadurch gekennzeichnet, daß die Einführöffnungen (29,29b,29c,29d,29g) schräg zur Mittel-Längs-Achse (21) des Schwingungsdämpfers (11) verlaufen.

3. Anlenkung nach Anspruch 1, dadurch gekennzeichnet, daß die Einführöffnungen (29e,29f) etwa in Richtung der Mittel-Längs-Achse (21) und zum Schwingungsdämpfer (11) hin offen ausgebildet sind.

4. Anlenkung nach einem der Ansprüche 1 bis 3, dadurch gekennzeichnet, daß der Lagerkörper als in Richtung der Schwenkachse (2o) mit einem Längsschlitz (25) versehene elastische Lagerhülse (26) ausgebildet ist, daß die Einführöffnungen (29) gegenüber der Lagerhülse (26) Untermaß aufweisen und daß die Lagerhülse (26) in den Lageröffnungen (28) elastisch eingerastet ist.

5. Anlenkung nach einem der Ansprüche 1 bis 3, dadurch gekennzeichnet, daß der Lagerkörper als Lagerbolzen (3o) ausgebildet ist und daß der Lagerbolzen in den Lageröffnungen (28) mittels mindestens eines Sicherungsbügels (31) elastisch verriegelt gehalten ist.

6. Anlenkung nach Anspruch 5, dadurch gekennzeichnet, daß der mindestens eine Sicherungsbügel (31) mit mindestens einem freien Ende (32) in einer Ausnehmung (33) einer Seitenwange (23) des Lagers (22) schwenkbar gelagert ist.

7. Anlenkung nach Anspruch 5 oder 6, dadurch gekennzeichnet, daß der Sicherungsbügel in einer Stellung an einem Widerlager (37) elastisch festlegbar ist, in der er den Lagerbolzen (3o) im Bereich der Einführöffnung (29) teilweise umschlingt und in der Lageröffnung (28) hält.

8. Anlenkung nach Anspruch 7, dadurch gekennzeichnet, daß das Widerlager (37,37c,37d,37e) an der Seitenwange (23b,23c,23d,23e) ausgebildet ist.

9. Anlenkung nach Anspruch 7, dadurch gekennzeichnet, daß das Widerlager (37f,37g) am Waschmaschinen-Gehäuse (Grundrahmen 5) ausgebildet ist.

10. Anlenkung nach Anspruch 8 oder 9, dadurch gekennzeichnet, daß das Widerlager (37) aus der Seitenwange (23) oder dem Maschingehäuse (Grundrahmen 5) herausgestanzt und herausgebogen ist.

FIG.1

FIG. 2

FIG. 3

16a
23
24
17
15a
14
21
11
12
13
18
19a
29
20
22a
23
IV
24

FIG. 4

k
26
25
23
23
22a
24

FIG. 5

29
28
n
l
20 (17)
23
22a (16a)
24

FIG. 6

26
k
o
25
m
27
27

8

FIG. 7

FIG. 8

FIG. 9

FIG. 10

## FIG. 11

## FIG. 12

## FIG. 13

FIG. 14

FIG. 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 217 234 (ZANUSSI ELETTROMECCANICA S.P.A.) <br> * Ansprüche 1-4; Abbildungen 1,2 * <br> --- | 1,4 | D06F37/20 <br> F16F9/54 <br> F16B17/00 |
| Y | MACHINE DESIGN. <br> Bd. 34, Nr. 18, 2. August 1962, CLEVELAND US <br> Seiten 112 - 114; <br> F.W. WOOD JR.: 'Design Details - Low-Cost Pivots' <br> * Abbildung und Text zu 'Grooved shaft rides in sheet-metal support' * <br> --- | 1,4 | F16C11/02 |
| A | PATENT ABSTRACTS OF JAPAN <br> vol. 3, no. 80 (M-65)11. Juli 1979 <br> & JP-A-54 057 076 ( KAYABA KOGYO K.K. ) 5. August 1979 <br> * Zusammenfassung * <br> --- | 4 | |
| A | DE-A-3 228 674 (STABILUS GMBH) <br> * Ansprüche 1-5; Abbildungen 4,6-8 * <br> * Seite 7, Zeile 33 - Seite 8, Zeile 11 * <br> * Seite 8, Zeile 23 - Seite 9, Zeile 3 * <br> --- | 1,5,7 | |
| A | DE-A-2 336 604 (SIEMENS AG) <br> * Abbildungen 3,4 * <br> --- | 5-7 | RECHERCHIERTE SACHGEBIETE (Int. Cl.5) <br><br> D06F <br> F16F |
| A | FR-A-2 194 252 (REGIE NATIONALE DES USINES RENAULT ET AL.) <br> * Abbildungen 1-3 * <br> --- | 4 | F16B <br> F16C |
| A | GB-A-856 569 (F.W. PAURAT) <br> * Abbildung 3 * <br><br> ----- | 5 | |

Der vorliegende Recherchenbericht wurde für alle Patentansprüche erstellt

| Recherchenort | Abschlußdatum der Recherche | Prüfer |
|---|---|---|
| DEN HAAG | 22 MAI 1992 | HAEUSLER F.U. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)